(19) Europäisches Patentamt

European Patent Office

Office européen des brevets

(11) EP 1 703 654 A1

(12) EUROPEAN PATENT APPLICATION

(43) Date of publication:
20.09.2006 Bulletin 2006/38

(51) Int Cl.:
$H04J\ 3/06^{(2006.01)}$ $\quad$ $H04J\ 3/08^{(2006.01)}$
$H04L\ 12/42^{(2006.01)}$ $\quad$ $H04J\ 3/14^{(2006.01)}$

(21) Application number: 06250790.0

(22) Date of filing: 14.02.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 14.03.2005 US 79762

(71) Applicant: Agilent Technologies Inc
Palo Alto, CA 94306-2024 (US)

(72) Inventor: Eidan, John C.
Loveland, CO 80537-0599 (US)

(74) Representative: Exell, Jonathan Mark
Williams Powell
Morley House
26-30 Holborn Viaduct
London EC1A 2BP (GB)

(54) Applications for multiple time synchronization domains

(57) Applications for multiple synchronization domains of a clock synchronization protocol include using multiple synchronization domains to handle the asymmetric delay in message transfer in a dual ring network topology, using multiple synchronization domains to provide a standby synchronization domain, and using multiple synchronization domains to gather information pertaining to the accuracy of master clocks.

FIG. 1

EP 1 703 654 A1

**Description**

## BACKGROUND

A clock synchronization protocol may be used to synchronize the clocks associated with the components of a networked system. Examples of networked systems are numerous and include distributed measurement and control systems as well as distributed software applications. One example of a clock synchronization protocol for a networked system is described in the IEEE 1588-2002 Standard for a Precision Clock Synchronization Protocol for Networked Measurement and Control Systems, IEEE, 8 November 2002, ISBN 0-7381-3369-8 (IEEE 1588 protocol).

The IEEE 1588 protocol is a master/slave protocol in which each slave clock synchronizes to a specific master clock. The communication path between a master clock and a slave clock according to the IEEE 1588 protocol may include repeaters, switches or routers that function as boundary clocks. A boundary clock functions a master for all but one of its ports and is a slave to another master on its remaining port. In a network with boundary clocks, one clock functions as the top-level master or grandmaster for purposes of clock synchronization.

A clock synchronization protocol may support multiple synchronization domains. For example, the IEEE 1588 protocol includes provisions for operating multiple synchronization domains with each synchronization domain having a distinct name. These domains are independent of each other. In prior networked systems, multiple synchronization domains may be used to enable systems such as a rack or bench of instruments to maintain separate time bases. The separate time bases may be used to prevent experiments on one set of component using one synchronization domain from interfering with a second similar set using a different synchronization domain during events such as changing instruments, etc.

## SUMMARY OF THE INVENTION

Applications are disclosed for multiple synchronization domains of a clock synchronization protocol. The present techniques include using multiple synchronization domains to handle the asymmetric delay in message transfer in a dual ring network topology, using multiple synchronization domains to provide a standby synchronization domain, and using multiple synchronization domains to gather information pertaining to the accuracy of master clocks.

Other features and advantages of the present invention will be apparent from the detailed description that follows.

## BRIEF DESCRIPTION OF THE DRAWINGS

The present invention is described with respect to particular exemplary embodiments thereof and reference is accordingly made to the drawings in which:

**Figure 1** shows a network that employs multiple synchronization domains according to the present techniques;

**Figure 2** shows a network topology that enables a set of slave clocks to provide an enhanced view of the accuracy of a master clock using multiple synchronization domains;

**Figure 3** shows another network topology that enables a set of slave clocks to provide an enhanced view of the accuracy of a master clock using multiple synchronization domains.

## DETAILED DESCRIPTION

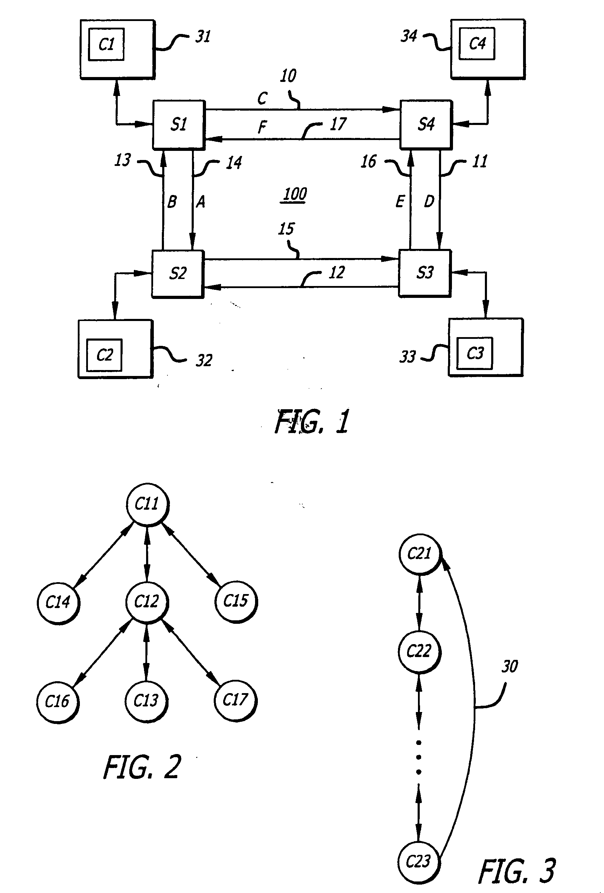

**Figure 1** shows a network 100 that employs multiple synchronization domains according to the present techniques. The network 100 has dual ring topology implemented with a set of communication switches S1-S4 and a set of network communication lines 10-17. The network communication lines 10-17 are connected to respective ports of the communication switches S1-S4. A clockwise (CW) ring includes the network communication lines 10-13 and a counter-clockwise (CCW) ring includes the network communication lines 14-17. Message travel on the CW and CCW rings is unidirectional. For example, messages travel from the communication switch S1 to the communication switch S2 on the CW ring via the network communication line 10 and messages travel from the communication switch S1 to the communication switch S2 on the CCW ring via the network communication lines 14-16.

One of the ports of the communication switch S1 is connected to a node 31 having a clock C1. Similarly, the switches S2-S4 each have a port connected to a respective node 32-34 having respective clocks C2-C4. Examples of the nodes 31-34 are numerous and include components that may be employed in a distributed measurement and control systems as well as a distributed software applications, e.g. sensor nodes, actuator nodes, computational nodes, application controllers, computer systems, instruments, etc.

The nodes 31-34 synchronize the time held in the clocks C1-C4 by exchanging timing messages via the network communication lines 10-17 according to a clock synchronization protocol that includes multiple synchronization domains. In one embodiment, the nodes 31-34 synchronize time by exchanging timing messages via the network communication lines 10-17 according to the IEEE 1588 protocol. Other clock synchronization protocols that provide multiple synchronization domains may be used in other embodiments.

The present techniques include using multiple synchronization domains to handle the asymmetric delay in the transfer of timing messages in a dual ring network topology, e.g. the network 100. In the following example, the clock C1 in the node 31 is a master clock and the clocks C2-C4 in the nodes 32-34 are slave clocks. The node 32, for example, determines a first offset for synchronizing the clock C2 to the master clock C1 by exchanging a set of timing messages with the node 31 via the CW ring of the network 100. The timing messages on the CW ring specify a CW synchronization domain according to the IEEE 1588 protocol. The node 32 also determines a second offset for synchronizing the clock C2 to the master clock C1 by exchanging a set of timing messages with the node 31 via the CCW ring in a CCW synchronization domain. The node 32 determines an offset for adjusting a time in the clock C2 by combining the first and second offsets. In one embodiment, the node 32 combines the first and second offsets by computing an average of the first and second offsets.

The node 32 may include a slave clock for the CW synchronization domain and a slave clock for the CCW synchronization domain and may adjust a time in each slave clock using the combined offset. Alternatively, the node 32 may include one slave clock for both synchronization domains and may adjust a time in the slave clock using the combined offset.

The following illustrates the synchronization computations according to the IEEE 1588 protocol if the clock C1 and the clock C2 were connected by a linear communication link rather than a dual ring. **Table 1** shows the relevant computations O is the offset between the slave clock C2 and the master clock C1.

**Table 1.**

| Master Event | Time at Master | Network Delay | Time at Slave | Slave Event |
|---|---|---|---|---|
| | $T_{mi}$ | | $T_{si}=T_{mi}+O$ | |
| 1) Send Sync | $T_{m1}$ | | $T_{s1}=T_{m1}+O$ | |
| | | $L_{ms}$ | $T_{s2}=T_{m1}+O+L_{ms}$ | 2) Receive Sync |
| | $T_{m3}$ | | $T_{m3}=T_{m3}+O$ | 3) Send Delay Req. |
| 4) Receive Delay Req. | $T_{m4}=T_{m3}+L_{sm}$ | $L_{sm}$ | $T_{s4}$ | |

The node 32 computes the following quantities in order to obtain the offset O for adjusting the slave clock C2 to the time of the master clock C1.

$$d_{ms}=T_{s2}-T_{m1}$$

$$d_{sm}=T_{m4}-T_{s3}$$

then note that

$$d_{ms}=T_{m1}+O+L_{ms}-T_{m1}=O+L_{ms}$$

and

$$d_{sm}=T_{m3}+L_{sm}-T_{m3}-O=-O+L_{sm}$$

and assuming

$$L_{ms}=L_{sm}+L_d$$

then

$$O=(d_{ms}-d_{sm}-L_{ms}+L_{sm})/2$$

and

$$L=(L_{ms}+L_{sm})/2=(d_{ms}+d_{sm})/2$$

and

$$L_{ms}=L-L_{d}/2$$

$$O=d_{ms}-L_{ms}=d_{ms}-L-L_{d}/2$$

Thus, if the master to slave latency $L_{ms}$ equals the slave to master latency $L_{sm}$, then $L_d$ is zero and the offset $O$ is the apparent master-slave difference $d_{ms}$ corrected by the apparent one-way latency $L$ for a liner link. However, the dual ring topology of the network 100 may create an extreme asymmetry in the master to slave and slave to master latencies $L_{CCWms}$, $L_{CWms}$ and $L_{CCWsm}$, $L_{CWsm}$. **Table 2** shows the timing for synchronizing the slave clock C2 to the master clock C1. Similar calculations exist for the other slave clocks C3 and C4.

**Table 2.**

| Master Event | Time at Master | Network Delay | Time at Slave | Slave Event |
|---|---|---|---|---|
| | $T_{mi}$ | | $T_{si}=T_{mi+O}$ | |
| | | CCW Ring | | |
| 1) Send Sync CCW | $T_{CCW}m_1$ | | $T_{CCWs1}=T_{CCW}m_1+O_{CCW}$ | |
| | | $L_{CCWms}$ | $T_{CCWs2}=T_{CCWm1}$ $+O_{CCW}+L_{CCWms}$ | 2) Receive Sync |
| | $T_{CCWm3}$ | | $T_{CCWs3}=T_{CCWm3}+O_{CCW}$ | 3) Send Delay Req. CCW |
| 4) Receive Delay Req. | $T_{CCWm4}=T_{CCWm}$ $L_{CCWsm}$ $T_{CCWs4\ 3}+L_{CCWsm}$ | | | |
| | | CW Ring | | |
| 1) Send Sync CW | $T_{CW}m_1$ | | $T_{CWs1}=T_{CWm1}+O_{CW}$ | |
| | | $L_{CWms}$ | $T_{CWs2}=T_{CWm1}+O_{CW}+$ $L_{CWmsc}$ | 2) Receive Sync |
| | $T_{CWm3}$ | | $T_{CWs3}=T_{CWm3}+O_{CW}$ | 3) Send Delay Req . CW |
| 4) Receive Delay Req. | $T_{CWm4}=T_{CWm3}+$ $L_{CWsm}$ | $L_{CWsm}$ | $T_{CWs4}$ | |

From **Table 2** the following can be derived for or the CCW synchronization domain.

$$d_{CCWms}=T_{CCWs2}-T_{CCWm1}$$

$$d_{CCWsm} = T_{CCWm4} - T_{CCWs3}$$

then note that

$$d_{CCWms} = T_{CCWm1} + O_{CCW} + L_{CCWms} - T_{CCWm1} = O_{CCW} + L_{CCWms}$$

and

$$d_{CCWsm} = T_{CCWm3} + L_{CCWsm} - T_{CCWm3} - O_{CCW} = -O_{CCW} + L_{CCWsm}$$

and assuming

$$L_{CCWms} = L_{CCWsm} + L_{dCCW}$$

then

$$O_{CCW} = (d_{CCWms} - d_{CCWsm} - L_{CCWms} + L_{CCWsm}) / 2$$

and

$$L_{CCW} = (L_{CCWms} + L_{CCWsm}) / 2 = (d_{CCWms} + d_{CCWsm}) / 2$$

and

$$L_{CCWms} = L_{CCW} - L_{dCCW} / 2$$

$$O_{CCW} = d_{CCWms} - L_{CCWms} = d_{CCWms} - L_{CCW} - L_{dCCW} / 2$$

From **Table 2** the following can be

$$d_{CWms} = T_{CWs2} - T_{CWm1}$$

$$d_{CWsm} = T_{CWm4} - T_{CWs3}$$

then note that

$$d_{CWms} = T_{CWm1} + O_{CW} + L_{CWms} - T_{CWm1} = O_{CW} + L_{CWms}$$

and

$$d_{CWsm} = T_{CWm3} + L_{CWsm} - T_{CWm3} - O_{CW} = -O_{CW} + L_{CWsm}$$

and assuming

$$L_{CWms} = L_{CWsm} + L_{dCW}$$

then

$$O_{CW} = (d_{CWms} - d_{CWsm} - L_{CWms} + L_{CWsm}) / 2$$

and

$$L_{CW} = (L_{CWms} + L_{CWsm}) / 2 = (d_{CWms} + d_{CWsm}) / 2$$

and

$$L_{CWms} = L_{CW} - L_{dCW} / 2$$

$$O_{CW} = d_{CWms} - L_{CWms} = d_{CWms} - L_{CW} - L_{dCW} / 2$$

With the exception of a slave clock exactly halfway around the ring from the master, the asymmetry values $L_{dCCW}$ and $L_{dCW}$ may be significant. Consider the equations.

$$O_{CCW} = (d_{CCWms} - d_{CCWsm} - L_{CCWms} + L_{CCWsm}) / 2$$

and

$$O_{CW} = (d_{CWms} - d_{CWsm} - L_{CWms} + L_{CWsm}) / 2$$

From Figure 1 it can be seen that

$$L_{CCWms} \sim = L_{CWsm}$$

and

$$L_{CWms} \sim = L_{CCWsm}$$

Adding these last two equations computing the average offset yields

$$O = (O_{CCW} + O_{CW}) / 2 = (d_{CCWms} - d_{CCWsm} + d_{CWms} - d_{CWsm}) / 4$$

The above equation shows that to within the accuracy of the CCW and CW latencies matching as above, the computed offset O is independent of the latencies $L_{CCWms}$ and $L_{CWsm}$. As a consequence, the use of two independent synchronization domains according to the present teachings eliminates the need to compute the latency. The dual ring topology may be used with time slotted communication protocols for which there is no queuing in switches so there is less need for extensive statistics to eliminate the effects of queues in the above computation. Even in a queued situation, e.g. ordinary Ethernet, this technique may be advantageous.

In one embodiment, each clock C1-C4 includes a separate physical clock for each of the CCW and CW synchronization domains. Each slave clock is slewed toward the average offset, thereby eventually bringing both clocks to the same time base. This may enhance redundancy and fault tolerance. Alternatively the two domains may share the same physical clock.

The following is an analysis of a fault in the network 100 caused by a break in the communication lines 12 and 15. For the CCW synchronization domain, the master to slave path from the clock C1 to the clock C2 is via segment A (network communication line 14) and the slave to master path from the clock C2 to the clock C1 is via segments B, C, D, E, and F (network communication lines 13, 10, 11, 16, and 17). For the CW synchronization domain the master to slave path from the clock C1 to the clock C2 is via segments C, D, E, F, and A while the slave to master path from the clock C2 to the clock C1 is via segment B.

For the calculations above the conditions $L_{CCWms}\sim=L_{CMsm}$ and $L_{CWms}\sim=L_{CCWsm}$ are reevaluated in view of the break in the communication lines 12 and 15. The path descriptions are as follows:

$L_{CCWms}$=latency of A
$L_{CWsm}$=latency of B
$L_{CWms}\sim=$ latency of C+D+E+F+A
$L_{CWMS}\sim=$latency of B+C+D+E+F

The comparisons are as follows:

Is $L_{CCWms}\sim=L_{CWsm}$? => Is latency of A$\sim=$latency of B?
Is $L_{CWms}\sim=L_{CCWsm}$? => Is latency of C+D+E+F+A$\sim=$latency of B+C+D+E+F?

The answer is yes provided the latency of A$\sim=$latency of B which is the same assumption as before with the unbroken ring. Thus, the use of two separate time synchronization domains, one for each direction of the ring in the un-faulted case, when taken together simplifies the accounting for the ring latencies.

The present techniques include using multiple synchronization domains to provide a standby mechanism for synchronization. If a failure in the network 100 hinders clock synchronization in a primary synchronization domain then the clocks C1-C4 may immediately switch over to the standby synchronization domain. This avoids spending the time that would be otherwise consumed in re-computing latencies or other synchronization parameters for a new master clock.

For example, the CW and CCW synchronization domains described above may be used a primary synchronization domain and a standby synchronization domain. The node 32 synchronizes to a time held in the node 31 by exchanging a set of timing messages with the node 31 via the CW ring in the primary synchronization domain and determines a standby offset for synchronizing to the time held in the node 31 by exchanging a set of timing messages with the node 31 via the CCW ring in the standby synchronization domain. The node 32 switches synchronization to the standby synchronization domain in response to a fault in the CW ring, i.e. it adjusts the time in the clock C2 using the standby offset.

The primary and the standby synchronization domains may have the same master clock or master clocks that derive time from a common source, e.g. a traceable time source such as GPS time. For example, the node 32 may include a master clock for the primary synchronization domain and a master clock for the standby synchronization domain such that the master clocks synchronize to one another during normal operation. Alternatively, the node 32 may include a common master clock for both the primary synchronization domain and the standby synchronization domain.

The correction value for the asymmetry of the primary synchronization domain and the correction value for the asymmetry of the standby synchronization domain may be determined using the computations described above and an asymmetry value may be selected to agree with the time determined by the use of both synchronization domains. In the event of a fault the asymmetry values are known, assuming the fault did not change the topology for the ring that survives the fault, for example, if the fault is a break in one of the rings.

The present techniques include using multiple synchronization domains to gather information pertaining to the accuracy of master clocks. For example, the IEEE 1588 protocol includes a provision for a slave clock of a master clock to determine a view of the accuracy, e.g. wander and jitter, of the master clock. The present techniques include selecting multiple synchronization domains so that each domain provides a different topological view of a master clock. If the topology is such that the master clock has several slave clocks then multiple views of the master clock may be obtained. For example, each synchronization domain may provide a different communication path, i.e. arrangement of communication lines, from a slave clock to a master clock being evaluated.

The slave clocks can obtain two types of information pertaining to their master clock. The first type of information a slave clock can obtain is a view of its master clock as seen by the slave clock itself and one or more other slave clocks of its master clock. A slave clock can make estimates of the drift and jitter of its master clock based on its own time base. The IEEE 1588 protocol specifies that drift and wander measurements may be accessible via a management message. Therefore any slave clock having its own drift and wander assessment of its master clock can retrieve similar information from other slave clocks of the same master clock via the management message structure. Alternatively a separate mechanism may be used extract this information from all clocks in a system.

The second type of information pertaining to a master clock that a slave clock can obtain is how the master clock views its own master clock if it has one. This information may be used by a slave clock to make an assessment of whether the drift and variance it observes of its master clock is degraded from the master clock's view of its master clock.

**Figure 2** shows an example network topology having a master clock C11 and a set of slave clocks C12, C14, and C15 that each provide a view of the accuracy of the master clock C11. The network topology provides each slave clock C12, C14, and C15 with an independent communication path to the master clock C11. This enables an evaluation of the accuracy of the master clock C11 based on the combined views of the slave clocks C12, C14, and C15 and their respective internal specifications, e.g. their own specifications of wander and jitter. If the slave clock C12 is an ordinary switch then the views provided by the slave clocks C16, C13, and C17 may also be combined to evaluate the master clock C11.

The confidence in an evaluation of a master clock increases if the multiple synchronization domains do not share common communication paths and components. It maybe preferable that each synchronization domain have its own grandmaster clock strategically situated to minimize common mode and with a separate 'out of band' measure of how well the several grandmasters are synchronized. For example, two synchronization domains may be implemented with a pair of grandmaster clocks at C14 and C16 and combined with the internal measures described above to provide enhanced information about the accuracy of the clocks.

**Figure 3** shows another network topology that enables a set of slave clocks C22-C23 to evaluate the accuracy of a master clock C21 using multiple synchronization domains. The clock C21 is a grandmaster clock for a first synchronization domain that encompasses the clocks C21-C23. The network topology includes a second synchronization domain for comparing the clock C21 and C23 using a separate communication path 30 that links the clock C21 and C23. This network topology enables a comparison of the deterioration of the synchronization down the chain of the clocks C21-C23 by observing the accumulated error between the clock C21 and C23. This information combined with the internal measures can be used to estimate limits on the possible excursions of the intervening, but unmeasured, clocks.

The foregoing detailed description of the present invention is provided for the purposes of illustration and is not intended to be exhaustive or to limit the invention to the precise embodiment disclosed. Accordingly, the scope of the present invention is defined by the appended claims.

**Claims**

1. A method for time synchronization, comprising:

   determining a first offset for synchronizing to a master clock associated with a first node by exchanging a set of timing messages with the first node via a first ring of a dual ring communication network (100) in a first synchronization domain;
   determining a second offset for synchronizing to the master clock by exchanging a set of timing messages with the first node via a second ring of the dual ring communication network (100) in a second synchronization domain;
   adjusting a local time by combining the first and second offsets.

2. The method of claim 1, wherein combining the first and second offsets comprises determining an average of the first and second offsets.

3. A system for time synchronization, comprising:

   first node that communicates via a first ring and via a second ring of a dual ring communication network (100);
   second node that determines a first offset for synchronizing to a master clock associated with the first node by exchanging a set of timing messages with the first node via the first ring in a first synchronization domain and that determines a second offset for synchronizing to the master clock by exchanging a set of timing messages with the first node via the second ring in a second synchronization domain and that adjusts a local time in the second node by combining the first and second offsets.

4. The system of claim 3, wherein the second node includes a slave clock for the first synchronization domain and a slave clock for the second synchronization domain.

5. A method for time synchronization, comprising:

   synchronizing to a time held in a first node by exchanging a set of timing messages with the first node via a first ring of a dual ring communication network (100) in a primary synchronization domain;
   determining a standby offset for synchronizing to the time held in the first node by exchanging a set of timing messages with the first node via a second ring of the dual ring communication network (100) in a standby synchronization domain;

switching synchronization to the standby synchronization domain in response to a fault in the first ring.

**6.** The method of claim 5, wherein switching synchronization comprises adjusting a local time in response to the standby offset.

**7.** A system for time synchronization, comprising:

first node that communicates via a first ring and via a second ring of a dual ring communication network (100); second node that synchronizes to a time held in the first node by exchanging a set of timing messages with the first node via the first ring in a primary synchronization domain and that determines a standby offset for synchronizing to the time held in the first node by exchanging a set of timing messages with the first node via the second ring in a standby synchronization domain and that switches synchronization to the standby synchronization domain in response to a fault in the first ring.

**8.** The system of claim 7, wherein the second node switches synchronization to the standby synchronization domain by adjusting a local time in the second node in response to the standby offset.

**9.** The system of claim 7, wherein the first node includes a master clock for the primary synchronization domain and a master clock for the standby synchronization domain.

**10.** A method for time synchronization, comprising:

gathering a first set of information pertaining to the accuracy of a master clock in a first time synchronization domain; gathering a second set of information pertaining to the accuracy of the master clock in a second time synchronization domain such that the first and second time synchronization domains have different topologies in a communication network (100) between a master clock and a set of slave clocks.

FIG. 1

FIG. 2

FIG. 3

**European Patent Office**

**EUROPEAN SEARCH REPORT**

Application Number

EP 06 25 0790

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 199 17 354 A1 (SIEMENS AG) 19 October 2000 (2000-10-19) * figures 1,4 * * abstract * * column 1, line 3 - column 2, line 31 * * column 3, line 41 - column 4, line 31 * ----- | 1-4 | INV. H04J3/06 H04J3/08 ADD. H04L12/42 H04J3/14 |
| X | US 6 285 687 B1 (LOVELACE GREGORY S ET AL) 4 September 2001 (2001-09-04) * abstract * * figures 1,4,6,10 * * column 8, line 50 - column 9, line 50 * * column 11, line 7 - column 11, line 53 * * column 15, line 34 - column 16, line 11 * ----- | 5-9 | |
| X | PATENT ABSTRACTS OF JAPAN vol. 1999, no. 03, 31 March 1999 (1999-03-31) & JP 10 322379 A (NEC MIYAGI LTD; NEC CORP), 4 December 1998 (1998-12-04) * the whole document * ----- | 10 | |

TECHNICAL FIELDS SEARCHED (IPC)

H04J
H04L

The present search report has been drawn up for all claims

| Place of search | Date of completion of the search | Examiner |
|---|---|---|
| The Hague | 20 June 2006 | Molinari, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

Application Number

EP 06 25 0790

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

**European Patent
Office**

**LACK OF UNITY OF INVENTION
SHEET B**

Application Number

EP 06 25 0790

The Search Division considers that the present European patent application does not comply with the
requirements of unity of invention and relates to several inventions or groups of inventions, namely:

1. claims: 1-4

   aligning the local clock to a master clock in a dual ring
   configuration
   ---

2. claims: 5-9

   maintaining synchronisation to the reference node in case of
   a fault in dual ring configuration
   ---

3. claim: 10

   monitoring the accuracy of a master reference clock via two
   synchronisation domains
   ---

## ANNEX TO THE EUROPEAN SEARCH REPORT
## ON EUROPEAN PATENT APPLICATION NO.

EP 06 25 0790

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2006

| Patent document cited in search report | | Publication date | Patent family member(s) | Publication date |
|---|---|---|---|---|
| DE 19917354 | A1 | 19-10-2000 | NONE | |
| US 6285687 | B1 | 04-09-2001 | NONE | |
| JP 10322379 | A | 04-12-1998 | NONE | |

EPO FORM P0459

For more details about this annex : see Official Journal of the European Patent Office, No. 12/82